# EUROPEAN PATENT SPECIFICATION

(11) **EP 1 012 948 B1**
(45) Date of publication and mention of the grant of the patent: **05.06.2013**
(21) Application number: 97950573.2
(22) Date of filing: 30.12.1997
(51) Int. Cl.: H02K 1/12, H02K 1/27, H02K 29/03

(54) **A high performance electric motor**
Hochleistungselektromotor
Moteur électrique a haut rendement

(30) Priority: 30.12.1996 TR 9601080
(43) Date of publication of application: 28.06.2000
(73) Proprietor: ARÇELIK A.S., 34950 Istanbul (TR)
(72) Inventor: ALBAS, Günsu, Erenköy 81090 Istambul (TR); TEZDUYAR, Latif, Göztepe 81080 Istambul (TR); SÖNMEZÖZ, Fehmi, 81080 Istambul (TR); DIRIL, Orhan Aydinlik S. Nur Apt. No. 5, 34590 Istambul (TR)
(86) International application number: PCT/TR1997/000026
(87) International publication number: WO 1998/029938

(56) References cited:
- WO-A-90/04874
- AT-B- 143 865
- CH-A- 446 511
- US-A- 2 892 109
- US-A- 4 712 035
- US-A- 4 777 397

## Description

The present invention is related to a high performance electric motor with intelligent motion properties.

Electric motors convert electrical energy into mechanical energy and transfer the motion to the load through their shafts. During this transfer, a high level of performance, is described as low noise level, low torque vibration, low speed oscillation; high power/weight ratio, high torque/current ratio, high efficiency, high motion controllability and high sensing capacity.

The control mechanisms and sensors, required for the realization of motion profiles desired for the loads, have to be accurate and expensive in proportion with the complexity of motion. However, motor's character; may eliminate the necessity of expensive control mechanism and sensor. This aspect in motors is known as high sensing capacity.

In the patent application No. EP 0629 735 A and in the U.S. patents No.s US 5.266. 855 and US 4.853.571 motors developed to receive high torque at low speeds are disclosed. In referred motors the stator and rotor yokes are formed as annular helical yokes edgewise wound from strips of magnetic material. This way of winding helical yokes causes slot opening to be large, that in turn may lead to the loss of torque and noisy operation.

In the said motors and in the motor described in the patent application No. GB 2 183 932 A the magnet placed inside the rotor are spaced apart and each magnet comprises a pole. In the said motor the stator windings are wound on each teeth.

U.S. patent No. US 4.712.035 relates in general to dynamoelectric machines and in particular to a salient pole electronically commutated motor and an inside-out salient pole core.

The object of the present invention is to obtain a high performance and low-cost electric motor that simplifies the transfer of the mechanical motion created by the motor to the driven load, requiring none or some mechanical transfer means such as belt/pulley arrangement or a gear box, on applications especially requiring varying torque and speed operations, requiring wide torque-speed range; requiring high torque value at low speeds.

A specific embodiment of the invention will now be described by way of example with reference to the accompanying drawing in which:

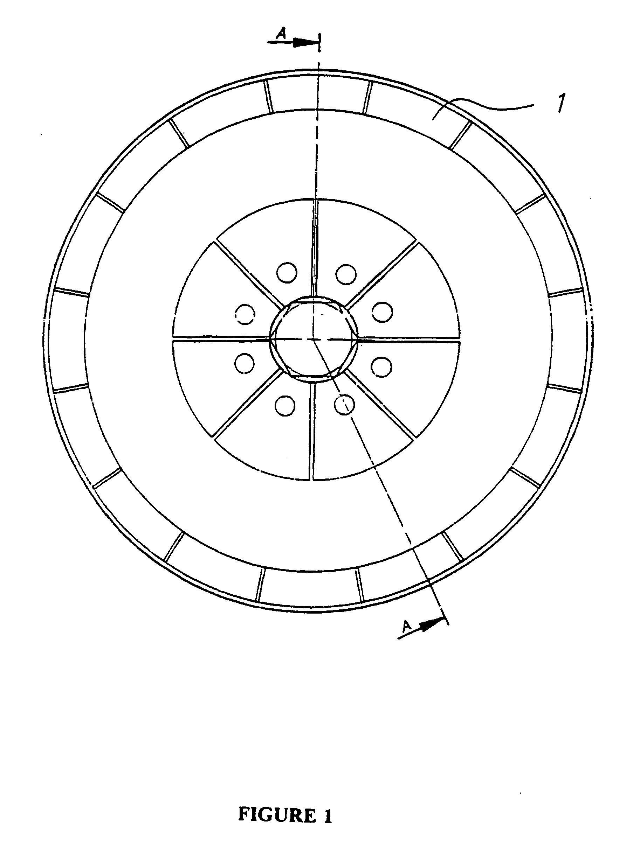

Figure 1 is the general view of the motor

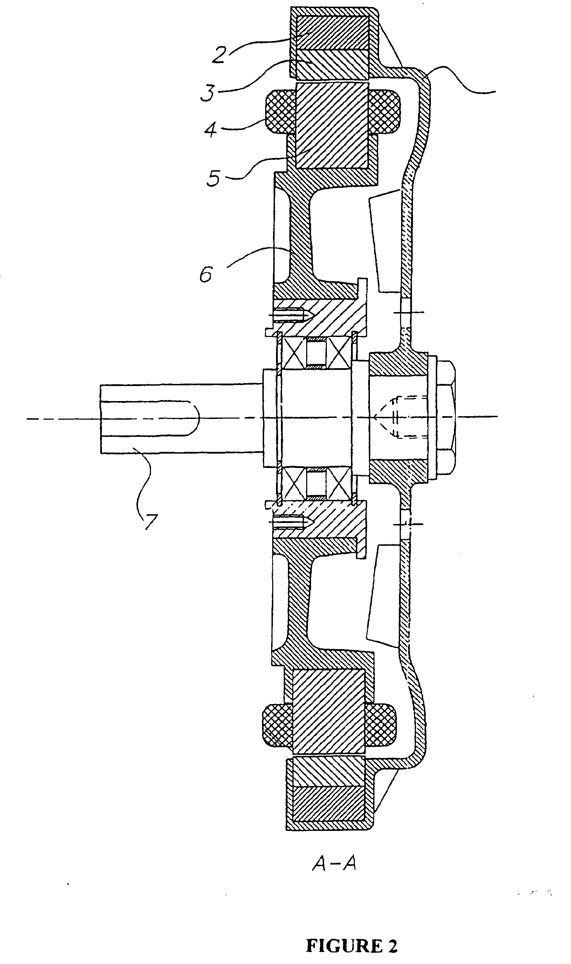

Figure 2 is the AA cross section of Fig.1.
Figure 3 is the view of stator lamination
Figure 4 is the view of skewed stator laminations
Figure 5 is the view of a segment of stator lamination
Figure 6 is the view of a segment of rotor lamination
Figure 7 is the part of rotor circle arc.

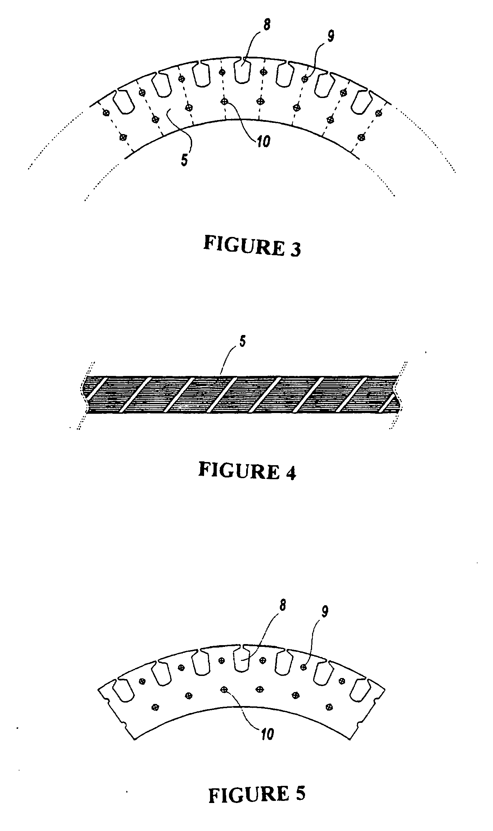

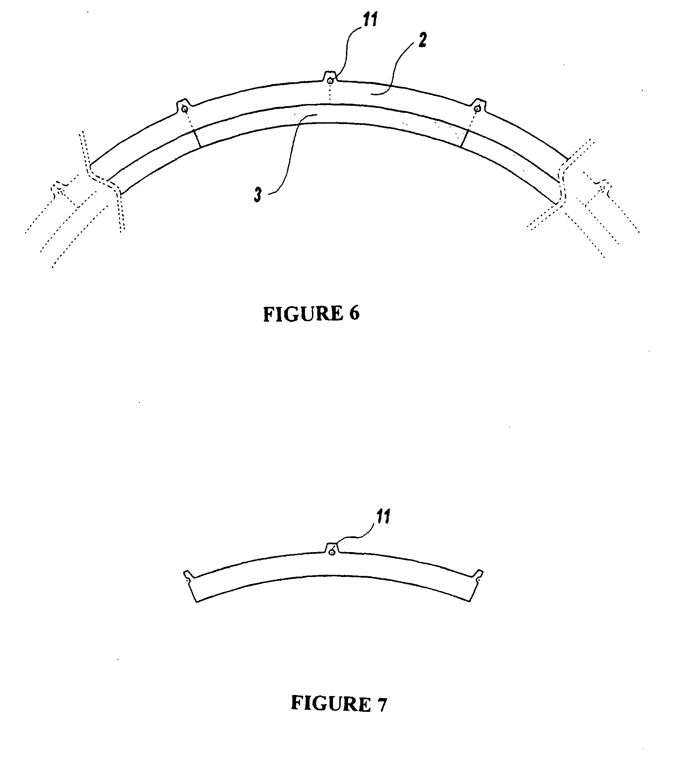

In the motor subject of the present invention, the stator and rotor are formed by the packaging of magnetic lamination circle are pieces (Figures 5 and 7). The said stator segments (Fig.5) and rotor segments (Fig.7) are cut in 180° or smaller angles in order to complete 360°. Providing the joining edges are be in the middle of the teeth.

In this case, the flux loss at joining edges will be minimum and hence the torque loss will be minimised. Said stator and rotor segments, (Fig.5 and 7) cut in 180° or smaller angles, have holes which are (9,10,11) required for packaging. Each lamination layer of the said stator yoke (5) and rotor yoke (2) are stacked on top of each other axially in such a manner that the joining edges of the said stator and rotor segments (Figures 5 and 7) are not lined and the said holes (9,10,11) are on the same line. Such arranged segments are placed in a suitable mould and the holes (9,10,11) are filled with a non-polymeric or non-magnetic metal suitable for injection moulding by pressure die casting method in order to form the rotor and stator yokes (2 and 5)and to join the segments.

As an alternative which does not form part of the invention

, the segments may be riveted to form stator and rotor yokes and to join segments, through the said holes (9,10,11). The holes (9) on the pole piece are discarded when considered unnecessary, depending on the motor diameter.

The motor subject to the present invention has been designed by two different approaches. The waveform of the induced voltage in the stator winding is trapezoidal in the first approach, is sinusoidal in the second approach. There are various designs to obtain the induced voltage in the form of sinusoidal wave. One of them is to skew the package of the stator laminations.

Segment-cutting method does not involve any dimensional restrictions and the slot (8) opening can be made at any value.

The above mentioned motor has an outer rotor and a series of permanent magnets (3) placed with no spaced apart intervals on the inner surface of the rotor yoke (2). These permanent magnets (3) are magnetized by a proper magnetizing fixture, to form as many poles as required by the application. In this case, one or more poles are obtained on one magnet segment. This method provides convenience in production. The permanent magnets (3) used at the rotor of the motor are magnetized radically or in parallel to provide proper polarisation.

The way of magnetisation and polarization determines the number of the poles, phase winding type and number of slot, of the motor.

The rotor yoke (2) of said motor and said permanent magnets (3) are connected with the motor shaft (7) by the rotor body (1) and rotor hub which are made of non-polymeric or non-magnetic metal suitable for injection casting, or directly with the load shaft. Above said motor allows a connection with the load shaft without requiring a motor shaft, due to its structural and dynamic properties. Thus cost saving is achieved by the elimination of motor shaft. For example, in certain applications that require such mechanical transfer elements as belt-pulley or switch gear box, the necessity of employing speed-reducing or motion-transferring elements is eliminated by re arranging the placement, using the motor of the present invention.

Said stator is connected to the motor shaft (7) or load shaft concentrically by a non polymeric or non magnetic metal (6) suitable for injection casting. The length of the rotor yoke (2) is equal to the length of stator yokes or longer by an appropriate proportion.

There are slots (8) on said stator for one or more phase AC windings (4) to be placed in.

The number of slots (8) per phase and pole can be equal to 1(=1), more than one (>1) or less than one (<1). In case it is equal to 1, concentric winding and in other cases, fractional-pitch winding is used. It is possible to wind stator windings either directly on each teeth or by skipping two or more slot pitches.

In order to monitor the voltage at the winding induced the permanent magnets (3) at the said rotor the position of the rotor is detected and the said stator windings (4) are fed by an inverter from the direct current supply. The position of the rotor is detected by optic sensors or by magnetic sensors that are placed in the air gap, with electrical angles suitable to the stator surface. This information obtained by the sensors are evaluated at the electronic control unit and the rotational direction, speed and torque of the motor is controlled by turning on and off the power electronic switches on the inverter.

Said motor has been designed according to two different approaches. In the First approach the waveform of the voltage induced at the stator winding (4) is trapezoidal and in the second approach it is sinusoidal.

In the first approach the noise level and torque vibration of the motors are reduced to a low level by using the electronic control method. In some applications such as servo systems there is need for low noiselevel and torque vibration. In this case, a motor wherein the waveform of the voltage induced at the stator winding (4) is sinusoidal, may be used. The purpose of this application is to be able to control the motor having a sinusoidal electro motor force (EMF) waveform, by means of low-cost rotor position sensors.

In order to obtain the induced voltage in a trapezoidal waveform, radial magnetization with no angles and concentrical winding are employed.

Whereas to obtain induced voltage in a sinusoidal waveform, there are various motor design options. These are:
● Skewing stator laminations.
● Polorization of permanent magnets (3) at the rotor by magnatizing, to skew them in the proper angle.
● Determining the number of stator slots (8) per phase and pole, fractionally.
● Forming a sinusoidal air gap flux by parallel magnetizing the permanent magnets (3) at the rotor or by using different types of magnets in the permanent magnet group forming one pole.

The common object of these design options is to obtain the magnetic flux formed at the air gap in the form of a sinusoidal wave. The electronic control unit realizes mechanical motion control by utilizing different algorithms, depending on the waveform of the voltage induced at the said stator winding (4).

In line with application demands, the stator windings (4) for both types of motor are made as tap-winding or non-tap winding depending on the required speed range.

At low speed, the tap winding is totally used whereas at high speed only the necessary amount is used. The electronic control unit developed in line with the requirements of the application determines the part of the winding to be used, by running digital algorithm. As an alternative, required speed levels are reached by using a non-tap stator winding instead of tap-windings, by changing the algorithm.

The referred motor is fed by an inverter consisting of power electronic switches, equal in number to the number of phases for a half-wave feeding, and twice the number of phases for a full-wave feeding. In the said inverter, a diode may be connected to each power electronic switch inversely parallel or in case the said switches are chosen as MOS gated switches, their own parasitical diode of the switch itself may be used.

A digital controller is used for the application of algorithms determined for the control of the said motor speed and torque. Alternatively, in order to reduce the cost of the controller, programmable logic elements may also be used for the application of algorithms in order to process the signals from the position sensor.

Said motor provides controlled both clock and counter clock wise, 100% mechanical motion continuously.

In said motor, motor position is sensed by simple sensors and any desired mechanical motion is transferred to the load.

It is possible for the said motor to provide the desired mechanical motion with a good performance by small changes made at its control circuit, at a 110 V, 220 V and any other voltage value without making any changes in the motor geometry. The motor can also be run at 110V, 220V by arranging the control circuit properly. The said motor runs with a noise level of approximately 35 dB at low speed and under 100 Watt load; and with approximately 60dB noise level at speeds between 1500 rpm and 2000 rpm under approximately 600 watt load. Said motor without requiring isolation provides the proper mechanical motor in application that need to be worked with low noise level and low vibration.

## Claims

1. An electric motor comprising a stator and a rotor, wherein the stator comprises a stator yoke (5) with two or more phase windings, and wherein the rotor comprises a rotor yoke (2); the stator yoke (5) and the rotor yoke (2) each comprising teeth; a rotor length is equal to or longer than stator length simplifying a transfer of mechanical motion to a driven load; which does not require or reduce the requirement of mechanical transfer elements such-as belt-pulley or gearbox having an outer rotor, **characterized in that** permanent magnets (3) are placed without any space in between on an inner surface of the rotor yoke (2), wherein the said rotor yoke (2) and stator yoke (5) are formed by packaging magnetic lamination segments, said segments being uniformly cut in 180° or smaller angles so that they complete 360°, and said segments being cut such that their joining edges are brought together in the middle of the teeth, and said segments comprising holes (9, 10, 11) for packaging, and each said magnetic lamination segment of said rotor yoke (2) and stator yoke (5) being stacked axially on top of the other such that the joining edges of said segments of said rotor yoke (2) and stator yoke (5) are not lined up and said holes (9, 10, 11) overlap on the same vertical alignment, and wherein said segments are connected to form the rotor yoke (2) and the stator yoke (5) by placing said segments in a mould and filling the holes (9, 10, 11) with a non-polymeric or non-magnetic metal, suitable for injection casting, by pressure diecasting.

2. An electric motor as claimed in Claim 1, **characterized in that** the said rotor yoke (2) and the said permanent magnets (3) are connected directly to the load shaft by means of the rotor body (1) and rotor hub formed by a non-polymeric and non-magnetic metal suitable for injection casting.

3. An electric motor as claimed in claims 1 to 2, **characterized in that** the electric motor, which is able to run in one or more speeds, has tapped windings.

4. An electric motor as claimed in claims 1 to 2, **characterized in that** the electric motor, which is able to run in one or more speeds, has non-tapped windings.

5. A method for the manufacturing of an electric motor claimed in any one of claims 1 to 4, **characterized in that** the segments of the rotor yoke (2) and the stator yoke (5) each are placed in a mould and connected to form the rotor yoke (2) and the stator yoke (5), wherein the holes (9, 10, 11) are filled with the non-polymeric or non-magnetic metal, suitable for injection casting, by pressure diecasting.

## Patentansprüche

1. Elektromotor, umfassend einen Stator und einen Rotor, wobei der Stator ein Statorjoch (5) mit zwei oder mehr Phasenwicklungen umfasst, und wobei der Rotor ein Rotorjoch (2) umfasst; wobei das Statorjoch (5) und das Rotorjoch (2) jeweils Zähne umfassen; eine Rotorlänge gleich oder größer als eine Statorlänge ist, was eine Übertragung mechanischer Bewegung an eine angetriebene Last vereinfacht; wobei mechanische Übertragungselemente wie etwa eine Riemenscheibe oder ein Getriebe mit einem Außenrotor nicht erforderlich sind oder ihre Notwendigkeit reduziert ist, **dadurch gekennzeichnet, dass** Dauermagneten (3) ohne Zwischenraum dazwischen an einer Innenfläche des Rotorjochs (2) angeordnet sind, wobei das Rotorjoch (2) und das Statorjoch (5) durch Packen von magnetischen Laminierungssegmenten ausgebildet sind, wobei die Segmente gleichmäßig in einem Winkel von 180° oder weniger geschnitten sind, derart, dass sie zusammen 360° bilden, und die Segmente derart geschnitten sind, dass ihre Verbindungskaten in der Mitte der Zähne zusammengeführt werden, wobei die Segmente Öffnungen (9, 10, 11) zum Packen umfassen, wobei die einzelnen magnetischen Laminierungssegmente des Rotorjochs (2) und des Statorjochs (5) axial übereinander gestapelt sind, derart, dass die Verbindungskanten der Segmente des Rotorjochs (2) und des Statorjochs (5) nicht in einer Reihe angeordnet sind und die Öffnungen (9, 10, 11) einander an derselben vertikalen Ausrichtung überlagern, und wobei die Segmente verbunden werden, um das Rotorjoch (2) und das Statorjoch (5) zu bilden, indem die Segmente in eine Form gelegt werden und die Öffnungen (9, 10, 11) mittels Druckguss mit einem nicht-polymeren oder nicht-magnetischen Metall gefiillt werden, das für Spritzguss geeignet ist.

2. Elektromotor nach Anspruch 1, **dadurch gekennzeichnet, dass** das Rotorjoch (2) und die Dauermagneten (3) über den Rotorkörper (1) und eine Rotornabe, die durch ein nicht-polymeres und nicht-magnetisches Metall gebildet sind, das für Spritzguss geeignet ist, direkt mit der Lastwelle verbunden sind.

3. Elektromotor nach Anspruch 1 bis 2, **dadurch gekennzeichnet, dass** der Elektromotor, der mit einer oder mehreren Drehzahlen laufen kann, Anzapfwindungen aufweist.

4. Elektromotor nach Anspruch 1 bis 2, **dadurch gekennzeichnet, dass** der Elektromotor, der mit einer oder mehreren Drehzahlen laufen kann, Nicht-Anzapfwindungen aufweist.

5. Verfahren zum Herstellen eines Elektromotors nach einem der Ansprüche 1 bis 4, **dadurch gekennzeichnet, dass** die Segmente des Rotorjochs (2) und des Statorjochs (5) jeweils in eine Form gegeben werden und verbunden werden, um das Rotorjoch (2) und das Statorjoch (5) zu bilden, wobei die Öffnungen (9, 10, 11) mittels Druckguss mit dem nicht-polymeren oder nicht-magnetischen Metall gefiillt werden, das für Spritzguss geeignet ist.

## Revendications

1. Un moteur électrique comprenant un stator et un rotor, où le stator comprend une culasse de stator (5) avec deux ou plusieurs enroulements de phase, et où le rotor comprend une culasse de rotor (2) ; chacune de la culasse de stator (5) et la culasse de rotor (2) comprenant des dents; une longueur de rotor est égale ou supérieure à la longueur de stator tout en simplifiant un transfert de mouvement mécanique à une charge entraînée; qui ne nécessite pas ou qui réduit l'exigence d'éléments mécaniques de transfert tels que la poulie-courroie ou la boîte d'engrenage ayant un rotor extérieur, **caractérisée en ce que** des aimants permanents (3) sont placés sans espace entre eux sur une surface intérieure de la culasse de rotor (2), où ladite culasse de rotor (2) et ladite culasse de stator (5) sont formées en empilant des segments de feuilletage magnétique, lesdits segments étant uniformément coupés dans des angles de 180 ou moins de manière à atteindre 360, et lesdits segments étant coupés de telle sorte que leurs bords de jonction sont réunis dans le milieu des dents, et les segments comprenant des trous (9, 10, 11) pour l'empilement, et chacun desdits segments de feuilletage magnétique de ladite culasse de rotor (2) et de ladite culasse de stator (5) étant empilé axialement l'un au-dessus de l'autre de telle sorte que les bords de jonction desdits segments de ladite culasse de rotor (2) et de ladite culasse de stator (5) n'alignons pas et lesdits trous (9, 10, 11) se chevauchent sur le même alignement vertical, et où lesdits segments sont reliés l'un à l'autre pour former la culasse de rotor (2) et la culasse de stator (5) en plaçant lesdits segments en un moule et remplissant les trous (9, 10, 11) avec un métal non-polymère ou non-magnétique, approprié pour la moulure par injection, par la coulée sous pression.

2. Un moteur électrique selon la Revendication 1, **caractérisé en ce que** ladite culasse de rotor (2) et lesdits aimants permanents (3) sont reliés directement à l'arbre de la charge par l'intermédiaire du corps de rotor (1) et le moyeu de rotor formés en un métal non-polymère ou non-magnétique approprié pour la moulure par injection.

3. Un moteur électrique selon les Revendications 1 et 2, **caractérisé en ce que** le moteur électrique, qui est capable de fonctionner à une ou plusieurs vitesses différentes, présente des enroulements à prises.

4. Un moteur électrique selon les Revendications 1 et 2, **caractérisé en ce que** le moteur électrique, qui est capable de fonctionner à une ou plusieurs vitesses différentes, présente des enroulements sans prise.

5. Un procédé pour la fabrication d'un moteur électrique selon l'une quelconque des revendications de 1 à 4, **caractérisé en ce que** les segments de la culasse de rotor (2) et de la culasse de stator (5) sont placés dans un moule et reliés l'un à l'autre pour former la culasse de rotor (2) et la culasse de stator (5), où les trous (9, 10, 11) sont remplis avec le métal non-polymère ou non-magnétique, approprié pour le moulage par injection, par la coulée sous pression.
